# EUROPÄISCHE PATENTSCHRIFT

(11) **EP 1 297 046 B1**
(45) Veröffentlichungstag und Bekanntmachung des Hinweises auf die Patenterteilung: **05.03.2008**
(21) Anmeldenummer: 01940509.1
(22) Anmeldetag: 21.05.2001
(51) Int. Cl.: C08G 18/50, C08G 18/62, C08G 18/70, C09J 175/04

(54) **HAFTKLEBSTOFFE MIT VERBESSERTER SCHERFESTIGKEIT BEI ERHÖHTEN TEMPERATUREN**
PRESSURE-SENSITIVE ADHESIVES EXHIBITING AN IMPROVED SHEAR STRENGTH AT ELEVATED TEMPERATURES
SUBSTANCES AUTO-ADHESIVES PRESENTANT UNE RESISTANCE ACCRUE AU CISAILLEMENT A TEMPERATURE ELEVEE

(30) Priorität: 15.06.2000 EP 00810518
(43) Veröffentlichungstag der Anmeldung: 02.04.2003
(73) Patentinhaber: Bayer MaterialScience AG, 51368 Leverkusen (DE)
(72) Erfinder: ABEND, Thomas, P., CH-9010 St. Gallen (CH)
(86) Internationale Anmeldenummer: PCT/EP2001/005777
(87) Internationale Veröffentlichungsnummer: WO 2001/096439

(56) Entgegenhaltungen:
- EP-A- 0 922 720
- EP-A- 1 013 690
- US-A- 5 371 133

## Beschreibung

Die Erfindung betrifft ein Verfahren zum Herstellen von Haftklebstoffen mit verbesserter Scherfestigkeit bei erhöhten Temperaturen, erzeugt aus wässerigen Dispersionen enthaltend isocyanatreaktive Polymere und feste oberflächendesaktivierte Isocyanate.

Die Industrie und das Handwerk suchen heute nach Hochleistungshaftklebstoffen, die für strukturelle Verklebungen in Form von einseitigen und doppelseitigen Klebebändern sowie als Transferklebstoffe im Konstruktionsbereich Verwendung finden. Solche Hochleistungshaftklebstoffe zeichnen sich durch verbesserte Zeitstandfestigkeit gegen statische mechanische Beanspruchungen auch bei Temperaturen über 100 °C aus.

Stand der Technik sind Hochleistungshaftklebstoffe, welche nach der Applikation auf das Trägermaterial im lösungsmittelfreien Zustand durch eine Bestrahlung im ultravioletten Bereich vernetzt werden. Der Nachteil dieser Systeme ist, dass die Bestrahlung der Haftklebstoffschicht einseitig erfolgt. Die Intensität des UV-Lichtes ist an der Oberfläche der Haftklebstoffschicht am grössten, dass heisst an der späteren Haftfläche. An dieser Oberfläche ist somit auch die Vernetzungsdichte am grössten. Darunter leiden die Soforthaftung und die Oberflächenklebrigkeit, was zu sofortigem oder späterem adhäsivem Versagen des Klebeverbundes führen kann.
Dies trifft vor allem zu, wenn Haftklebstoffschichten mit einer Schichtdicke über 80 µm oder 100 µm mit UV-Licht bestrahlt werden. Hochleistungshaftklebstoffe mit Schichten über 100 µm werden vor allem dort eingesetzt, wo die Substratoberfläche erhöhte Rauhigkeit aufweist.

Nach EP 904 853 können Verbesserungen solcher Systeme durch eine selektive UV-Bestrahlung erzielt werden, zum Beispiel durch eine Lochmaske oder Schablone. Es resultieren hochvernetzte Bereiche mit hoher mechanischer Tragfähigkeit und reduzierter Klebrigkeit, neben Bereichen mit niederer Vernetzungsdichte, aber mit guter Oberflächenklebrigkeit.

Der apparative Aufwand und die Kosten für die UV-Bestrahlung generell, und insbesondere für diejenige mit Lochmaske, können erheblich sein. Ein weiterer Nachteil ist auch, dass die UV-Bestrahlung nur am bandförmigen Hochleistungshaftklebstoff vorgenommen werden kann. Eine Änderung der mechanischen Eigenschaften an der Verklebung ist normalerweise aus verschiedenen Gründen unmöglich.

Eine weitere Lösung um Hochleistungshaftklebstoffe zu erzeugen, ist die thermische Nachvernetzung der Klebstoff Schicht. Es resultieren Haftklebstoffe, welche vor der thermischen Aktivierung gute Soforthaftung und akzeptablen Kriechwiderstand zeigen, nach der Aktivierung hohe Festigkeit und statische Tragfähigkeit. Ein Nachteil bisheriger Systeme sind die langen Expositionszeiten von 10 bis 30 Minuten bei hohen Aktivierungstemperaturen im Bereich von 120 bis 150 °C. Beispiele sind die hitzeaktivierbaren Folien HAF (Basis Epoxy- oder Phenolharz, Copolyamid mit Epoxyvernetzer, Phenolnitrilkautschuk) der Tesa Industries, Beiersdorf AG (D-Hamburg) oder das warmhärtende Klebeband SBT 9245 der 3M (USA-St.Paul MN), beschrieben in G. Bennet, et al.; Strukturelles Haftklebeband - Eine Innovation in der Klebetechnik; Tagungsband 10. Int. Symposium Swissbonding, CH-Rapperswil, 1996, S. 197-205.

Durch die langen Expositionszeiten wird der Anwendungsbereich bisheriger Systeme limitiert. Viele Substrate nehmen Schaden, wenn sie während 10 bis 30 Minuten Temperaturen im Bereich von 120 bis 150°C ausgesetzt sind. Deshalb sind Systeme mit tieferen Aktivierungstemperaturen und/oder Expositionszeiten wünschenswert.

Eine Übersicht über Haftklebstoffe, und speziell durch UV-Bestrahlung oder thermisch nachvernetzbare strukturelle Haftklebstoffe, gibt P. L. Geiss, in "Verarbeitungskonzepte und Belastungskriterien für Haftklebstoffe" Hinterwaldner Verlag, München, 1998.

Aus der EP-A 0 922 720 ist die Herstellung einer Kontaktklebung bekannt, die durch beidseitige Auftragung und Trocknung einer wässrigen Dispersion oder Lösung aus einem isocyanatreaktiven Polymer und einem oberflächendesaktivierten, feinteiligen festen Polyisocyanat und anschließender Wärmebehandlung der Klebstoffschichten auf den zu fügenden Substraten erhalten wird. Davon zu unterscheiden sind die Haftklebstoffe und -verbindungen gemäß vorliegender Erfindung, also Klebstoffe bzw. Klebverbindungen aus einseitig vorhandenen Schichten (z.B. Etiketten, TESA^{®} Film etc.).

Diese beiden Typen von Klebstoffen und die an sie zu richtenden Anforderungen sind derart unterschiedlich, dass technische Lehren, die für Kontaktkleber gelten, nicht ohne weiteres auf Haftkleber übertragbar sind. Daher ist für den Fachmann, der vor der Aufgabe steht, einen Haftkleber hinsichtlich seiner Scherfestigkeit zu verbessern überraschend, Haftklebstoffschichten mit verbesserter Scherfestigkeit dadurch erzeugen zu können, dass eine zusätzliche Wärmebehandlung vorgenommen wird.

In der noch unveröffentlichten Anmeldung PCT/CH99/00577 des gleichen Anmelders wird ein reaktives System zur Herstellung von spontan vernetzenden Haftklebstoffen beschrieben. Dieses System besteht aus einer wässerigen Dispersion mit wenigstens einem isocyanatreaktiven Polymer und wenigstens einem oberflächendesaktivierten festen Isocyanat. Merkmale dieser Dispersionen sind
- Glasübergangstemperatur Tg des isocyanatreaktiven Polymers kleiner oder gleich - 5 °C
- Speichermodul G' des isocyanatreaktiven Polymers kleiner oder gleich 10⁷ Pa, gemessen bei 10 Hz und 10 °C
- Minimale Filmformungstemperatur MFT kleiner oder gleich + 5 °C
- Mittlerer Teilchendurchmesser der festen Isocyanate kleiner oder gleich 10 µm.

Aufgabe der Erfindung gemäss PCT/CH99/00577 ist die Herstellung wässeriger Dispersionen oder Lösungen, welche feste, oberflächendesaktivierte Polyisocyanate und isocyanatreaktive Polymere enthalten, welche in dieser Form, d.h. als wässerige Dispersion oder Lösungen lagerstabil sind, bei denen jedoch, wenn als Schicht aufgetragen, nach Entfernung des wesentlichen Teils des Wassers eine teilweise Vernetzung ausgelöst wird.

Im Rahmen der weiterführenden Untersuchungen wurde nun überraschenderweise gefunden, dass die viskoelastischen und mechanischen Haftklebstoffeigenschaften der resultierenden haftklebrigen Schicht gezielt und reproduzierbar durch eine Wärmebehandlung (b) der haftklebrigen Schicht erheblich beeinflusst werden können.

Nachfolgend wird ein Verfahren zum Herstellen einer Haftklebstoffschicht und zur Erhöhung ihrer Scherfestigkeit gezeigt. Das erfindungsgemässe Verfahren enthält die Schritte
- i): Bereitstellen einer wässrigen Dispersion oder Lösung enthaltend wenigstens ein isocyanatreaktives Polymer mit einer Glasübergangstemperatur T_{g} kleiner oder gleich - 5°C und ein festes oberflächendesaktiviertes Polyisocyanat;
- ii): Auftragen der wässerigen Dispersion oder Lösung auf ein Substrat;
- iii): Durch Entfernung des Wasser oder Lösungsmittels durch Trocknung bei einer Temperatur (a) von +20°C bis +95°C (gemessen in der Schicht) Erzeugung einer Haftklebstoffschicht mit einen Loop Tack, gemessen nach der FTM-9-Methode der FINAT, von wenigstens 0.787 N/cm [2 N/inch];
dadurch gekennzeichnet, dass in einem anschließenden Schritt
- iv): eine Wärmebehandlung (b) der in Schritt (iii) erzeugten Haftklebstoffschicht erfolgt, wobei diese kontinuierlich, stufenweise oder direkt auf eine die Temperatur (a) übersteigende Temperatur gebracht wird, welche die Temperatur (a) um mindestens +40°C übersteigt und die Scherfestigkeit der resultierenden Klebverbindung der so erzeugten Haftklebstoffschicht durch diese Wärmebehandlung (b) um mindestens 10% erhöht wird verglichen mit der Scherfestigkeit der Haftklebstoffschicht ohne Wärmebehandlung(b).

In einer ersten Stufe wird das Wasser aus der durch eine wässerige Dispersion oder Lösung auf ein Substrat aufgetragenen Schicht durch Trocknung (a) bei Trocknungstemperaturen im Bereich von 20 °C bis 95 °C, insbesondere von 50 °C bis 95 °C, entfernt. Es resultiert eine Haftklebstoffschicht, vorzugsweise mit einem LoopTack von wenigstens 2 N/inch. Der Loop Tack kann nach der FTM-9 Methode der FINAT (Federation Internationale des Fabricants et Transformateurs d'Adhesives et Thermocollants sur Papiers et autres Supports) bestimmt werden.

Als Haftklebstoffschicht im Sinne der Erfindung wird die im wesentlichen wasserfreie Form der Dispersion, insbesondere mit einem Loop Tack von mindestens 2N/inch, verstanden. Der Begriff Schicht wird in DIN EN 971-1: 1996-09 definiert. Erfindungsgemäss wird das Wasser soweit aus der Dispersion entfernt bis eine Schicht entsteht.

Als Substrat zum Auftragen einer Schicht der wässerigen Dispersion oder Lösung sind verschiedene Materialien wie z. B. Bänder oder Folien geeignet. Die wässerige Dispersion oder Lösung kann dabei ein- oder zweiseitig aufgetragen werden. So lassen sich insbesondere ein- oder zweiseitige Haftklebbänder oder Transferbänder herstellen, welche erfindungsgemäss hergestellte Haftklebstoffschichten aufweisen.

Das Verdunsten des Wassers und damit die Ausbildung einer Haftklebstoffschicht kann sowohl bei Raumtemperatur oder bei erhöhten Temperaturen bis maximal 95°C (gemessen in der Schicht) durchgeführt werden und z. B. durch Warmluftströme oder durch Luftströme mit niederer Luftfeuchtigkeit beschleunigt werden. Besonders bevorzugt sind dabei Trocknungstemperaturen im Bereiche von 50 - 95 °C (gemessen in der Schicht).
Industriell üblich sind Lufttemperaturen von 110 bis 125 °C beim Eintritt in den Trocknungstunnel, welche gegen Ende der Trocknungsstrecke auf 90 bis 95 °C reduziert werden. Temperaturverlauf und Expositionszeit im Trocknungstunnel können so gewählt werden, dass die aufgetragene Schicht nicht über Temperaturen von 95 °C erwärmt wird. Das Verdunsten des Wassers kann auch durch gleichzeitige Bestrahlung mit Infrarotlicht oder mit Mikrowellen beschleunigt werden. Die Trocknungszeit hängt dabei im wesentlichen von der Schichtdicke ab. So sind je nach Schichtdicke bspw. 15 min. bei 20°C, 15 min bei 50°C oder 5 sec. bei 95°C denkbar.

In einer zweiten Stufe kann die Scherfestigkeit der erfindungsgemäss hergestellten Haftklebstoffschichten gezielt und reproduzierbar durch eine Wärmebehandlung (b) beeinflusst werden. Die Wärmebehandlung (b) wird erfindungsgemäss bei einer die Trocknungstemperatur (a) übersteigenden Temperatur durchgeführt. Besonders bevorzugt wird eine Maximaltemperatur für die Wärmebehandlung (b), welche die Trocknungstemperatur (a) um wenigstens 40°C übersteigt. Die Scherfestigkeit der resultierenden Klebverbindung übersteigt die Scherfestigkeit der Haftklebstoffschicht vor Wärmebehandlung um mindestens 10 %.
Die Scherfestigkeit kann nach der FTM-8 Methode der FINAT (Federation Internationale des Fabricants et Transformateurs d'Adhesives et Thermocollants sur Papiers et autres Supports) bestimmt werden.
Unter Klebverbindung im Sinne der Erfindung werden Substrate mit wenigstens einer erfindungsgemäss hergestellten Haftklebstoffschicht nach erfolgter Wärmebehandlung (b) bezeichnet. Dazu gehören insbesondere ein- oder zweiseitig beschichtete Haftklebbänder, Transferbänder oder Verklebungen von ein oder mehreren gleichen oder unterschiedlichen Substraten.

Die Wärmebehandlung (b) der Haftklebstoffschicht kann unmittelbar nach Wasserentzug durch Trocknung (a) oder zu einem späteren Zeitpunkt durchgeführt werden. Dabei werden die erfindungsgemäss hergestellten Haftklebstoffschichten kontinuierlich, stufenweise oder direkt, so erwärmt, dass die Scherfestigkeit der wärmebehandelten Haftklebstoffschicht, respektive der resultierenden Klebverbindung um wenigstens 10% gegenüber dem Wert vor der Wärmebehandlung (b) erhöht wird.
Unter kontinuierlicher Erwärmung im Sinne der Erfindung wird verstanden, dass mit einem konstanten Temperaturzuwachs (Temperaturgradient), z. B. 2°C/min oder 5°C/min erwärmt wird. Bei einer stufenweisen Erwärmung im Sinne der Erfindung wird während verschiedenen Zeiten bei unterschiedlichen konstanten Temperaturen und/oder mit unterschiedlichen Temperaturgradienten erwärmt. Bei der direkten Erwärmung wird der Haftklebstoff in einem Schritt einer konstanten, die Trocknungstemperatur (a) übersteigenden Temperatur ausgesetzt, insbesondere einer Temperatur, die die Trocknungstemperatur (a) um mindestens 40°C übersteigt.

Die Dauer der Wärmebehandlung (b) hängt wesentlich von der Reaktivität der isocyanatreaktiven Gruppen des in der wässerigen Dispersion enthaltenen funktionellen Polymers ab. Beispielsweise unterscheidet sich die Reaktivität zwischen primären Hydroxyl- und Carboxylgruppen unter gleichen Bedingungen ungefähr um einen Faktor bis zu 100. Der zweite Reaktionspartner, die festen Isocyanate, weisen Reaktivitäten der Isocyanatgruppen auf, die sich ebenfalls bis zu einem Faktor von 100 unterscheiden können. Ebenso können Katalysatoren die Umsetzung beschleunigen.

Aus diesen Gründen muss die für die Wärmebehandlung (b)benötigte Zeit experimentell bestimmt werden. Die Dauer der Wärmebehandlung (b) reicht von minimal 5 Sekunden bei 135 °C (oder höheren Temperaturen) bis zu maximal 30 Minuten bei 90 °C (gemessen in der Schicht). Besonders bevorzugt ist eine Maximaltemperatur bei der Wärmebehandlung (b), welche die Trocknungstemperatur (a) zum Entfernen des Wassers um mindestens 40°C übersteigt.

Die Wärmebehandlung (b) wird idealerweise im Bereich von 60°C bis 200°C, bevorzugt von 90°C bis 180°C durchgeführt, wobei die Scherfestigkeit der resultierenden Klebverbindung im Vergleich zur Scherfestigkeit der Haftklebstoffschicht vor der Wärmebehandlung (b) um mindestens 10% erhöht wird.

Die Oberflächenklebrigkeit der Haftklebstoffschichten, z. B. gemessen als Loop Tack, soll durch die Wärmebehandlung (b) idealerweise 50% des Wertes vor der Wärmebehandlung (b)nicht unterschreiten.

Die für die Wärmebehandlung (b) benötigte Wärme kann Kontaktwärme, Konvektionswärme, Strahlungswärme im sichtbaren oder im infraroten Bereich sein. Es können auch Substrate mit Induktionswärme oder mit Mikrowellen erhitzt und damit die Wärme auf das Klebeband und die Klebeschicht übertragen werden. Die Haftklebeschicht kann auch gefüllt sein mit anorganischen, metallischen oder organischen Füllstoffen, die auf die genannten Stahlungsarten ansprechen.

Die Wärmebehandlung (b) führt (im Gegensatz zur Vernetzung mit UV-Bestrahlung, speziell einer solchen mit einer Lochmaske) zu einer makroskopisch homogenen Klebstoffschicht mit gleichen Eigenschaften in allen Schichten und über den ganzen Querschnitt.

Durch die besondere Auswahl der Komponenten in der wässerigen Dispersion oder Lösung resultieren Haftklebstoffschichten, die bei tieferen Temperaturen, insbesondere bei Temperaturen unterhalb 100°C und/oder bei kürzeren Expositionszeiten, z. B. 5 sec bei 135°C (oder höheren Temperaturen) thermisch nachvernetzt werden können.

Die wässerigen Dispersionen oder Lösungen müssen im wesentlichen die folgenden Anforderungen erfüllen:
- (a): Die minimale Filmbildungstemperatur (MFT) nach DIN 53787:1974-02 ist kleiner oder gleich + 5°C;
- (b): die Glasübergangstemperatur (Tg) des isocyanatreaktiven Polymers muss kleiner oder gleich -5°C sein;
- (c): der Speichermodul G' des isocyanatreaktiven Polymers muss kleiner oder gleich 10⁷ Pa, gemessen bei 10°C und 10 Hz, sein.

Die viskoelastischen Kenngrössen (Glasübergangstemperatur und Speichermodul) der aus der Dispersion resultierenden Filme werden mit DTMA (dynamisch thermomechanische Analyse) nach ISO 6721-1 bestimmt. Kalorische Messungen (DSC Differential Scanning Calorimetry) sind ebenfalls anwendbar. Geeignete Verfahren sind in DIN 53765: 1994-03 und ISO 11357-2: 1996 genormt. Eine Beschreibung der dynamischen thermomechanischen Eigenschaften und ihre Bestimmung ist darüber hinaus in der Encyclopedia of Polymer Science and Engineering, Vol 5; H.F. Mark Ed.; New York 1986, p. 299 ff., enthalten.

Die isocyanatreaktiven Polymere können durch Copolymerisation von olefinisch ungesättigten Monomeren in Lösung, Emulsion oder Suspension hergestellt werden. Sie enthalten 0.1 bis 15 %, bevorzugt 1 bis 8 % einpolymerisierte Monomere mit isocyanatreaktiven Gruppen, wie Hydroxyl-, Amino-, Carboxyl- oder Säureamid- und Methylolsäureamidgruppen.

Bevorzugt sind hydroxy-, carboxy- und aminofunktionelle Dispersionscopolymere von Acrylsäureestern und Methacrylsäureestern, Acrylnitril, Vinylacetat, Diester der Malein- und Fumarsäure, Vinylether, Copolymere des Ethylens mit Vinylacetat, funktionelle Copolymere des Styrol, Butadiens, Isoprens, α-Chlorbutadiens. Die Molekulargewichte liegen im allgemeinen zwischen 100,000 und 800,000 Da, können aber auch höher als 800,000 Da liegen, besonders wenn vernetzende Monomere mitverwendet werden.

Einsatz finden darüber hinaus auch wasserlösliche und wasserdispergierbare Polyurethan- oder Polyharnstoffdispersionen, die durch Reaktion von amorphen oder teilkristallinen reaktiven Polyestern, Sulfopolyestern, Polycaprolactonen, Polycarbonaten und Polyethern, welche Sulfoxyl-, Carboxyl, Hydroxyl- sowie primäre oder sekundäre Aminogruppen tragen, mit aliphatischen oder aromatischen Polyisocyanaten entstehen.

Der Löslichkeitsparameter δ des wasserfreien funktionellen Polymers sollte mit Vorteil im Bereich von 8.25 bis 13.5 (cal/cm³)^{1/2} liegen. Für die Definition des Löslichkeitsparameters siehe Römpp Lexikon, Lacke und Druckfarben, Hrsg. U. Zorll, Stuttgart 1998, S. 361 ff.

Die Konzentration der isocyanatreaktiven Polymere in Wasser beträgt ungefähr 20 - 80 Gew.%, bevorzugt 30 - 70 Gew. % des Gesamtgewichtes der Dispersion oder Lösung.

Der pH-Wert der Dispersion oder Lösung liegt im Bereich von 6 bis 10, bevorzugt zwischen 7 und 9. Falls notwendig kann durch zugabe von anorganischen oder organischen Basen oder Säuren der pH-Wert in den gewünschten Bereich gebracht werden.

Im Zuge der vorliegenden Erfindung soll der Begriff der Dispersion auch Emulsionen, Suspensionen und Polymerlösungen miteinschliessen.

Als feste Polyisocyanate sind alle wasserunlöslichen Di- oder Polyisocyanate oder deren Gemische geeignet, sofern sie einen Schmelzpunkt oberhalb +38 °C aufweisen. Es können aliphatische, cycloaliphatische, heterocyclische oder aromatische Polyisocyanate sein. Als Beispiele seien genannt: Diphenylmethan-4,4'-diisocyanat (4,4'-MDI), dimeres 2,4'- und 4,4'-MDI, Naphthalin-1,5-diisocyanat (NDI), 3,3'-Dimethyl-biphenyl-4,4'-diisocyanat (TODI), dimeres 1-Methyl-2,4-phenylen-diisocyanat (TDI-U), 3,3'-Diisocyanato-4,4'-dimethyl-N,N'-diphenylharnstoff (TDI-H), Additionsprodukte von 2 Mol 4,4'-MDI mit 1 Mol Diethylenglykol, Additionsprodukte von 2 Mol 1-Methyl-2,4-phenylen-diisocyanat mit 1 Mol 1,2-Ethandiol oder 1,4-Butandiol, Additionsprodukte von 2 Mol Hexamethylen-1,6-diisocyanat mit 1 Mol 1,2-Ethandiol, das Isocyanurat des Isophorondiisocyanats (IPDI-T).

Die festen Polyisocyanate sollen pulverförmig mit einem mittleren Teilchendurchmesser von kleiner oder gleich 10 µm (Gewichtsmittel) vorliegen. Unter Gewichtsmittel im Sinne der Erfindung wird verstanden, dass auf 100 g feste Polyisocyanate im Mittel 50 g einen Teilchendurchmesser kleiner oder gleich 10 µm aufweisen.

Die festen Polyisocyanate fallen im Regelfall bei der Synthese als Pulver mit dem geforderten Teilchendurchmesser von 10 µm oder weniger an, andernfalls müssen sie (vor der Desaktivierungsreaktion) durch Mahl-, Sicht- oder Siebprozesse in den erfindungsgemässen Teilchenbereich von kleiner oder gleich 10 µm gebracht werden. Alternativ können die pulverförmigen Polyisocyanate durch eine der Oberflächendesaktivierung nachgeschaltete Nassmahlung und Feindispergierung auf einen mittleren Teilchendurchmesser von gleich oder weniger als 10 µm gebracht werden. Mahl-, Klassifizier- und Messverfahren sind Stand der Technik.

Die Oberflächenstabilisierungsreaktion kann auf verschiedenen Wegen durchgeführt werden:
- Durch Dispersion des pulverförmigen Isocyanats in einer Lösung des Desaktivierungsmittels.
- Durch Eintragen einer Schmelze eines niederschmelzenden Polyisocyanats in eine Lösung des Desaktivierungsmittels in einem nichtlösenden flüssigen Dispersionsmittel.
- Durch Zugabe des Desaktivierungsmittels oder einer Lösung desselben, zur Dispersion der festen feinteiligen Isocyanate.

Die festen Polyisocyanate werden vorzugsweise durch Einwirkung von primären und sekundären aliphatischen Aminen, Di- oder Polyaminen, Hydrazinderivaten, Amidinen, Guanidinen, desaktiviert. Bewährt haben sich Ethylendiamin, 1,3-Propylendiamin, Diethylentriamin, Triethylen-tetramin, bis-Hexamethylen-triamin, 2,5-Dimethylpiperazin, 3,3'-Dimethyl-4,4'-diamino-dicyclohexylmethan, Methylnonan-diamin, Isophorondiamin, 4,4'-Diamino- dicyclohexylmethan, Diamino- und Triaminopolypropylenether (Jeffamine), Polyamidoamine, und Gemische von Mono-, Di- und Polyaminen.

Die Konzentration des Desaktivierungsmittels soll 0.1 bis 20, bevorzugt 0.5 bis 8 Equivalentprozent betragen, bezogen auf die total vorhandenen Isocyanatgruppen des festen Isocyanats.

Das Equivalentverhältnis der Isocyanatgruppen der oberflächendesaktivierten Polyisocyanate und der isocyanatreaktiven Gruppen der Polymere soll im Bereich 0.1 bis 1.5 liegen. Dies entspricht im allgemeinen einer Konzentration des oberflächendesaktivierten festen Isocyanats von 0.1 bis 10 Gewichtsteilen, bevorzugt 0.1 - 8 Teilen pro 100 Teile festes isocyanatreaktives Polymer.

Die Vernetzungsdichte ist gegeben durch die Konzentration des festen Isocyanats und durch die Konzentration der isocyanatreaktiven Gruppen, welche im allgemeinen im Überschuss vorliegen. Die Vernetzungsdichte Mc soll in den erfindungsgemässen Haftklebstoffen einen Wert von Mc = 3000 g/mol nicht unterschreiten. Unter Mc wird das mittlere Molekulargewicht der elastisch wir- - kenden Kettenlänge zwischen den Vernetzungsstellen verstanden. Der Grad der Vernetzung kann mit der Erhöhung der Temperaturbeständigkeit in der wärme, mit fehlender Thermoplastizität bei erhöhten Temperaturen, mit der Schäl- oder Scherfestigkeit unter statischer Last, Veränderung der Oberflächenklebrigkeit, sowie mit höherer Wasserbeständigkeit (im Vergleich zum unvernetzten Polymer) nachgewiesen werden. Auch mit Analysenmethoden wie dynamische thermomechanische Analyse (DTMA), Gel- oder Löslichkeitsbestimmung kann der Nachweis der Vernetzung geführt werden.

Die wässerige Dispersion oder Lösung enthält gegebenenfalls zusätzliche Katalysatoren für die Reaktion der Isocyanatgruppen mit den funktionellen Gruppen des Polymeren.

Katalysatoren für die Reaktion der Isocyanatgruppen mit den funktionellen Gruppen des Polymers sind organische Zinn-, Eisen-, Blei-, Kobalt-, Wismuth-, Antimon-, Zink-Verbindungen oder ihre Mischungen. Bevorzugt sind solche Katalysatoren, welche in wässeriger Lösung oder Dispersion hydrolysenstabil sind. Alkylmercaptidverbindungen des Alkylzinns sind aufgrund der höheren Hydrolysenstabilität besonders geeignet. Tertiäre Amine wie Dimethylbenzylamin, Diazabicyclooctan, sowie nichtflüchtige Polyurethanschaumkatalysatoren auf tertiärer Aminbasis, wie etwa Methyldiethanolamin, können für spezielle Zwecke oder in Kombination mit Metallkatalysatoren verwendet werden.

Die Konzentration der Katalysatoren liegt im Bereich von 0.001 bis 1 %, bevorzugt 0.01% bis 0.1 %, bezogen auf das feste reaktive System.

Weiterhin enthalten die wässerigen Dispersionen oder Lösungen, gegebenenfalls klebrigmachende Harze oder niedrigmolekulare, isocyanatreaktive Verbindungen.

Die zugabe von polaren Lösungsmitteln, wie N-Methylpyr- rolidon, N-Methylacetamid, Dimethylformamid, Propylencarbonat, Dioxan, Glykolmonomethlyetheracetat ist ebenfalls denkbar. Diese polaren Lösungsmittel sind jedoch nur dann einsetzbar, wenn dadurch in der wässerigen Dispersion kein Zerstören der Desaktivierungsschicht auf den festen Isocyanaten, der Polyharnstoffschicht, erfolgt.

Unter dem Begriff Weichmacher werden flüssige oder feste, organische Substanzen mit geringem Dampfdruck verstanden. Sie können ohne chemische Reaktion, vorzugsweise durch ihr Löse- bzw. Quellvermögen, u. U. aber auch ohne ein solches, mit hochpolymeren Stoffen unter Bildung eines homogenen Systems in physikalische Wechselwirkung treten.

Zusätzlich können der wässerigen Dispersion oder Lösung niedrigmolekulare Polymere oder Harze, speziell haftvermittelnde Harze, beigegeben werden. Diese weisen ein Molekulargewicht gleich oder kleiner 5000 Da (Gewichtsmittel) auf. Die Harze können natürlich oder synthetisch, flüssig oder fest sein, sie können in dispergierter oder emulgierter Form in Wasser beigegeben werden. Sie können in Konzentrationen bis 100 Festteile pro 100 Teilen festes Polymer zugegeben werden.

Als niedrigmolekulare isocyanatreaktive Verbindungen können wasserlösliche oder emulgierbare niedrigmolekulare flüssige Polyole oder/und polyfunktionelle Amine eingesetzt werden. Beispiele sind Butandiol, Trimethylolpropan, ethoxyliertes Bisphenol A, Methyldiethanolamin, Triethanolamin.

Zusätzlich können der wässerigen Dispersion oder Lösung weitere zuschlagstoffe, insbesondere inerte Zuschlagsstoffe zugegeben werden.

Unter dem Begriff inerte Zuschlagstoffe sollen alle Zusätze bzw. Stoffe verstanden werden, die weder auf die Lagerstabilität noch auf die Vernetzung einen Einfluss ausüben. Zu dieser Gruppe gehören z.B. Netzmittel, grenzflächenaktive Stoffe, Hilfsmittel zur Steuerung des Fliessverhaltens resp. der Rheologie, haftvermittelnde Stoffe, organofunktionelle Silane, Schutzkolloide, organische oder anorganische Verdickungsmittel, Entschäumer, Biozide, Lichtstabilisatoren, Alterungsstabilisatoren, Korrosionsschutzmittel, Füllstoffe, Pigmente, Farbstoffe.

Die Herstellung der Dispersionen geschieht in den bekannten Dispergiergeräten, wie Dissolvern, Rührwerksmühlen, Perlmühlen, Rotor-Stator-Mühlen, Planetenmischgeräten. Dabei ist darauf zu achten, dass die oberflächenstabilisierten feinteiligen Polyisocyanate nicht hohen Scherkräften ausgesetzt werden, damit die Harnstoffschicht auf der Oberfläche nicht zerstört wird. Die Mischtemperatur der reaktiven Dispersionen ist je nach der Art der verwendeten festen Polyisocyanate im Bereich von +15 bis +50°C, bevorzugt unter 35 °C.

Es hat sich bewährt, wenn zuerst konzentrierte flüssige Stammmischungen mit den festen oberflächenstabilisierten Polyisocyanaten hergestellt werden, welche der wässerigen Polymerdispersion oder -lösung erst nach Einarbeitung der Komponenten zugesetzt werden. Die Herstellung der Stammmischungen geschieht bei Temperaturen von +5°C bis +30°C.

Die erfindungsgemäss hergestellten Haftklebstoffschichten und Klebverbindungen können in Form von einseitigen und doppelseitigen Klebebändern sowie als trägerfreier Transferklebstoff eingesetzt werden.

Als Träger für einseitig oder doppelseitig klebende Haftklebebänder können Papiere, Pappe, Metallfolien, Gewebe aus organischen und anorganischen Fasern, Vliese, Schäume aus Acryl-, Polyurethan-, Polyolefinmaterialien verwendet werden. Die trägerfreien Transferklebstoff können auf klebstoffabweisenden Filme, üblicherweise oberflächen-silikonisiert, aufgetragen werden.

Es werden je nach Anwendung Klebstoffschichten von 5 bis 500 µm, bevorzugt 10 bis 250 µm (trocken gemessen) aufgetragen.

Die thermisch nachbehandelten Haftklebstoffschichten finden Verwendung in bei höheren Temperaturen kriechresistenten Hochlei-, stungsklebstoffen, in Klebeverbindungen bei Montage und Fertigungsprozessen, in statisch belastbaren Klebebandkonfigurationen im Befestigungsbereich. Sie können auch verwendet werden für Befestigungsklebungen mit höherer Temperaturbeständigkeit und Scherfestigkeit

Die wärmebehandlung (b) kann nicht nur am ein- oder zweiseitigen Haftklebeband oder am Transferband vorgenommen werden, sondern auch an der Verklebung von ein oder zwei gleichen oder unterschiedlichen Substraten mit den vorgenannten Bändern, Abschnitten oder Stanzlingen. Beispielsweise kann eine Montageverklebung mit einem Band mit hoher aggressiver Klebrigkeit und mässiger Scherfestigkeit durch eine Wärmebehandlung (b)verwandelt werden in eine strukturelle Verklebung mit hoher Scherfestigkeit, Temperaturbeständigkeit und mässiger Oberflächenklebrigkeit.

Die vorliegende Erfindung wird durch nachfolgende Beispiele weiterhin erläutert.

### Beispiele

### Verwendete Methoden und Materialien

### Haftklebende wässerige Polymerdispersionen

AC 7506 Copolymer von Butylacrylat, 2-Ethylhexylacrylat und Acrylsäure, carboxyfunktionell. Ca. 65 % feste Bestandteile. Molekulargewicht > 500'000 Da, MFT < 5°C, Tg -30 °C, Speichermodul G' = 10⁶ Pa bei 10 Hz und 10 °C

AC 7522 Copolymer von 2-Ethylhexylacrylat,2-Hydroxyethyl-(meth)acrylat, wenig Acrylsäure und vernetzendes Diacrylat, überwiegend hydroxyfunktionell. Ca. 68 % feste Bestandteile. Molekulargewicht > 500'000 Da, MFT < 5 °C, Tg - 43 °C, Speichermodul G' = 7.5x10⁵ Pa bei 10 Hz und 10 °C

Hersteller Alberdingk Boley GmbH, D-Krefeld

### Verarbeitung der Dispersionen

- 1): Beschichtungsgewicht ca. 30 g/qm (trocken gemessen) auf Substrat Polyesterfolie
- 2): Verfahren (a): Getrocknet im Luftstrom bei 60 °C während 10 Minuten
- 3): Verfahren (b): Wärmebehandlung bei 100 °C während 15 Minuten
- 4): Geprüft nach 24 Stunden nach Trocknung (a) resp. Wärmebehandlung (b)

### Prüfung der Haftklebstoffe und verklebungen

Es wurde nach den Prüfmethoden der FINAT (Federation Internationale des Fabricants et Transformateurs d'Adhesives et Thermocollants sur Papiers et autres Supports) geprüft, mit Ausnahme des SAFT-Wertes (Shear Adhesion Failure Temperature) nach Ford und der Zugscherfestigkeit nach DIN 53503.
- FTM 1: Klebkraft (180 ° Schälwiderstand), mit Angabe der Versagensart (Kohäsiv, mit Bruch im Klebstoff; Adhäsiv, Klebstoff trennt sich vom Substrat)
- FTM 8: Scherfestigkeit oder Scherwiderstand unter statischer Belastung; Angabe: Minuten bis zum Versagen der Klebestelle
- FTM 9: Oberflächenklebrigkeit (Quick Stick und Schlaufenmethode)
- SAFT: Methode Ford. Temperatursteigerurig jeweils 5 °C pro 10 Minuten, unter statischer Belastung mit 0.9N/cm². Angabe: Temperatur °C beim Versagen der Klebestelle

### Beispiele 1 - 3

### Herstellung von wässerigen Dispersionen (Stammlösungen) von oberflächendesaktivierten Isocyanaten mit ca. 33 % Feststoff

### Verwendete Bestandteile

| | | |
|---|---|---|
| (1) (5) | Wasser | deionisiert |
| (2) | Kelzan S | Hydrokolloid, Dispersionsstabilisator |
| (3) | Tween 85 | Polyoxyethylen-sorbitan-trioleat |
| (4) | Jeffamine T-403 | Triamin, NH-Aequivalentgewicht 146 g/eq. |
| | | |
| (6) | IPDI-T | Isophoron-diisocyanat-trimer (Metalink IT, Acima AG, CH-Buchs) mittlere Partikelgrösse ungefähr 1.8 µm |
| (7) | TDI-H | 2,4-TDI-Harnstoff (Metalink H, Acima AG, CH-Buchs) mittlere Partikelgrösse ungefähr 4.5 µm |
| (8) | TDI-U | 2,4-TDI-Uretdion (Metalink U, Acima AG, CH-Buchs) mittlere Partikelgrösse ungefähr 4.5 µm |

| Stammlösung (g) | Beispiel 1 Mit IPDI-T | Beispiel 2 Mit TDI-H | Beispiel 3 Mit TDI-U |
|---|---|---|---|
| (1) Wasser, deionisiert | 94.5 | 94.5 | 94.5 |
| (2) Kelzan S | 0.5 | 0.5 | 0.5 |
| (3) Tween 85 | 1.0 | 1.0 | 1.0 |
| (4) Jeffamine T-403 (0.01 eq.)* | 1.55 | 1.55 | 1.55 |
| | | | |
| (5) gelöst in Wasser | 5.0 | 5.0 | 5.0 |
| (6) IPDI-T (0.217 eq.)* | 52.00 | | |
| (7) TDI-H (0.305 eq.)* | | 52.00 | |
| (8) TDI-U (0.288 eq.)* | | | 52.00 |
| (9) Total | 154.55 | 154.55 | 154.55 |

| | | | |
|---|---|---|---|
| *3.3 bis 4.6 Equivalent-ö der Isocyanatgruppen desaktiviert | | | |

Die Stammlösungen wurden mit dem Dissolver bei 1200 UPM in die wässerigen haftklebenden Polymerdispersionen eingerührt.

### Beispiele 4-8

### Dispersion von desaktiviertem IPDI-T, dispergiert in AC 7506 (Copolymer von Butylacrylat, 2-Ethylhexylacrylat und Acrylsäure, carboxyfunktionell)

| Beispiel | 4 | 5 | 6*⁾ | 7 | 8*⁾ |
|---|---|---|---|---|---|
| IPDI-T; phr Verfahren/ Temperatur °C | 0 (a)/60 | 0.5 (a)/60 | 0.5 (a)/60 (b)/100 | 1.5 (a)/60 | 1.5 (a)/60 (b)/100 |
| | | | | | |
| Loop Tack FTM-9; N/in. | 7.9 | 7.7 | 6.4 | 7.1 | 4.9 |
| | | | | | |
| Quick-Stick FTM-9; N/in. | 27.6 | 26.1 | 19.7 | 24.0 | 17.4 |
| | | | | | |
| FTM-8: Scherfestigkeit bei Raumtemperatur, Last 10 N/cm², Minuten bis Versagen | 8 | 12 | 31 | 13 | 63 |
| | | | | | |
| FTM-8; Scherfestigkeit bei 70 °C, Last 2 N/ cm² Minuten bis Versagen | 14 | 17 | > 5000 | 20 | > 5000 |
| | | | | | |
| SAFT (Ford TM) Δ5°C/10 Minuten. Versagenstemp. °C | 88 | >150 | >150 | >150 | >150 |
| | | | | | |
| Zugscherfestigkeit, N/cm², DIN 53503 | 48.9 | 51.2 | 53.5 | 51.7 | 54.8 |

| | | | | | |
|---|---|---|---|---|---|
| *) erfindungsgemäße Beispiele | | | | | |

Die Beispiele 5 bis 8 zeigen klar, welche Wirkung die Zugaben von kleinen Mengen oberflächendesaktivierter mikronisierter Isocyanate hat (vergleiche mit Beispiel 4) und die enorme Steigerung der Scherfestigkeit oder des Scherwiderstandes bei der Wärmebehandlung bei 100 °C, verglichen mit Klebstoffschichten die bei 60 °C getrocknet wurden (Beispiele 5 bis 8).
Die Haftwerte (Loop Tack und Quick Stick) werden durch die Wärmebehandlung (b) nur mässig verschlechtert.
Die SAFT-Werte in den Beispielen 5 und 7 sind schon ohne weitere Wärmebehandlung über den industriell geforderten Werten von +150 °C. Die Zugscherwerte werden durch die Zugabe der oberflächendesaktivierten mikronisierten Isocyanate kaum beeinflusst.

### Beispiele 9-12

### Dispersion von desaktiviertem TDI-U, dispergiert in AC 7522 Copolymer von 2-Ethylhexyl-acrylat, 2-Hydroxyethyl(meth)acrylat, wenig Acrylsäure; überwiegend hydroxyfunktionell.

| Beispiel | 9 | 10*⁾ | 11 | 12*⁾ |
|---|---|---|---|---|
| TDI-U; phr Verfahren/ Temperatur °C | 0.168 (a)/60 | 0.168 (a)/60 (b)/100 | 0.672 (a)/60 | 0.672 (a)/60 (b)/100 |
| | | | | |
| Loop Tack FTM-9; N/in. | 9.8 | 7.1 | 9.1 | 6.3 |
| | | | | |
| FTM-8: Scherfestigkeit bei Raumtemperatur, Last 10 N/ cm², Minuten bis Versagen | 39 | 995 | 48 | >5000 |
| | | | | |
| FTM-8; Scherfestigkeit bei +100°C, Last 2 N/cm²' Minuten bis Versagen | 160 | > 5000 | >5000 | > 5000 |
| | | | | |
| FTM-1 Klebkraft (180 ° Schälwiderstand) N/in. | 22.0 | 18.1 | 18.7 | 16.3 |
| | | | | |
| Versagensart (kohäsiv=k; adhäsiv=a) | 50 % k | 25 % k | | |
| | | 75 % a | 100 % a | 100 % a |

| | | | | |
|---|---|---|---|---|
| *) erfindungsgemäße Beispiele | | | | |

Die Beispiele 11-13 zeigen, dass das TDI-U als aromatisches Isocyanat reaktionfähiger ist als das IPDI-T, zudem hat es ein tieferes Equivalentgewicht. Mit weniger Einsatz führt es zu stärkerer Vernetzung und damit höherer Scherfestigkeit bei Raum- wie bei höheren Temperaturen. Dazu trägt auch bei, dass das Polymer hydroxyfunktionell und damit reaktiver ist als das carboxyfunktionelle AC 7506.

Mit der Wahl und Konzentration des festen Isocyanats und der funktionellen Gruppen des Polymers können die kohäsiven Eigenschaften bis zu vollständiger adhäsiver Trennung vom Substrat beim Schälversuch gesteuert werden.

### Beispiele 13-16

### Dispersion von desaktiviertem TDI-H, dispergiert in AC 7522 Copolymer von 2-Ethylhexyl-acrylat, 2-Hydroxyethyl(meth)acrylat, wenig Acrylsäure; überwiegend hydroxyfunktionell.

| Beispiel | 13 | 14*⁾ | 15 | 16*⁾ |
|---|---|---|---|---|
| TDI-H, phr Verfahren/ Temperatur °C | 0.168 (a)/60 | 0.168 (a)/60 (b)/100 | 0.672 (a)/60 | 0.672 (a)/60 (b)/100 |
| | | | | |
| Loop Tack FTM-9; N/in. | 10.1 | 7.8 | 10.0 | 6.1 |
| | | | | |
| FTM-8: Scherfestigkeit bei Raumtemperatur, Last 10 N/ cm², Minuten bis Versagen | 24 | 48 | 29 | 64 |
| | | | | |
| FTM-8; Scherfestigkeit bei 100 °C, Last 2 N/ cm² Minuten bis Versagen | >5000 | >5000 | >5000 | >5000 |
| | | | | |
| FTM-1 Klebkraft (180 ° Schälwiderstand) N/in. | 17.1 | 22.3 | 16.1 | 21.2 |
| | | | | |
| Versagensart (kohäsiv=k; adhäsiv=a) | 25 % k | | 100 % k | 100 % k |
| | 75% a | 100 % a | | |

| | | | | |
|---|---|---|---|---|
| *) erfindungsgemäße Beispiele | | | | |

TDI-H enthält aromatische Isocyanatgruppen, es weist im Vergleich zu TDI-U ein niederes Equivalentgewicht auf und hat ein verschiedenes Lösungs- und Reaktionsverhalten.

Die Beispiele zeigen, dass schon bei der Trocknung bei 60 °C gewisse Eigenschaften ein Maximum aufweisen. Bei der Trocknung bei 60 °C hat das System schon überwiegend kohäsive Eigenschaften, bei der Wärmebehandlung bei 100 °C entwickelt es auf dem Substrat Haftung: Die Hafteigenschaften führen dazu, dass beim Schälversuch nach FTM-1 die kohäsiven Eigenschaften den adhäsiven Eigenschaften unterlegen sind.

## Patentansprüche

1. Verfahren zur Herstellung einer Haftklebstoffschicht umfassend
i) Bereitstellen einer wässrigen Dispersion oder Lösung enthaltend wenigstens ein isocyanatreaktives Polymer mit einer Glasübergangstemperatur T_{g} kleiner oder gleich -5°C und ein festes oberflächendesaktiviertes Polyisocyanat;
ii) Auftragen der wässerigen Dispersion oder Lösung auf ein Substrat;
iii) Durch Entfernung des Wasser oder Lösungsmittels durch Trocknung bei einer Temperatur (a) von +20°C bis +95°C (gemessen in der Schicht) Erzeugung einer Haftklebstoffschicht mit einen Loop Tack, gemessen nach der FTM-9-Methode der FINAT, von wenigstens 0.787 N/cm [2 N/inch];
**dadurch gekennzeichnet, dass** in einem anschließenden Schritt
iv) eine Wärmebehandlung (b) der in Schritt (iii) erzeugten Haftklebstoffschicht erfolgt, wobei diese kontinuierlich, stufenweise oder direkt auf eine die Temperatur (a) übersteigende Temperatur gebracht wird, welche die Temperatur (a) um mindestens +40°C übersteigt und die Scherfestigkeit der resultierenden Klebverbindung der so erzeugten Haftklebstoffschicht durch diese Wärmebehandlung (b) um mindestens 10% erhöht wird verglichen mit der Scherfestigkeit der Haftklebstoffschicht ohne Wärmebehandlung (b).

2. Verfahren gemäß Anspruch 1, **dadurch gekennzeichnet, dass** die wässerige Dispersion oder Lösung (i) eine minimale Filmbildungstemperatur (MFT) von kleiner oder gleich +5°C aufweist.

3. Verfahren gemäß einem der Ansprüche 1 bis 2 **dadurch gekennzeichnet, dass** das isocyanatreaktive Polymer ein Speichermodul G' kleiner oder gleich 10⁷ pa, gemessen bei 10 Hz und +10°C, hat.

4. Verfahren gemäß einem der Ansprüche 1 bis 3 **dadurch gekennzeichnet, dass** das feste oberflächendesaktivierte Polyisocyanat einen mittleren Teilchendurchmesser (Gewichtsmittel) kleiner oder gleich 10 µm hat.

5. Verfahren gemäß einem der Ansprüche 1 bis 4 **dadurch gekennzeichnet, dass** das isocyanatreaktive Polymer ausgewählt ist aus der Gruppe bestehend aus Acrylester-, Methacrylester-, Acrylnitril-, Vinylacetat-, Styrol-, Ethylen-, Butadien- oder α-Chlorbutadien-copolymeren, Polyurethanen auf Polyester- oder Polyetherbasis und Polyharnstoffen auf Polyester oder Polyetherbasis.

6. Verfahren gemäß einem der Ansprüche 1 bis 5 **dadurch gekennzeichnet, dass** das Verhältnis der Isocyanatgruppen des Polyisocyanats und der isocyanatreaktiven Gruppen der Polymere in der wässerigen Dispersion oder Lösung im Bereich von 0.1 bis 1.5 liegt.

7. Haftklebverbindung hergestellt durch Berühren eines mit einer gemäß dem Verfahren nach Ansprüchen 1 bis 7 erhaltenen Haftklebstoffschicht beschichteten Substrats mit einem Substrat, welches an der Berührungsfläche nicht mit einer solchen Schicht beschichtet ist.

8. Haftklebverbindung nach Anspruch 7, **dadurch gekennzeichnet, dass** ihre Vernetzungsdichte Mc wenigstens 3000g/mol beträgt.

9. Verwendung einer wässerigen Dispersion oder Lösung enthaltend wenigstens ein isocyanatreaktives Polymer und ein festes oberflächendesaktiviertes Polyisocyanat zum Herstellen einer Haftklebstoffschicht mit einem Loop Tack von wenigstens 0.787 N/cm [2 N/inch], wobei die Haftklebstoffschicht erhalten wurde durch
i) Bereitstellen einer wässerigen Dispersion oder Lösung enthaltend wenigstens ein isocyanatreaktives Polymer mit einer Glasübergangstemperatur T_{g} kleiner oder gleich -5°C und ein festes oberflächendesaktiviertes Polyisocyanat;
ii) Auftragen der wässerigen Dispersion oder Lösung auf ein Substrat;
iii) Durch Entfernung des Wasser oder Lösungsmittels durch Trocknung bei einer Temperatur (a) von +20°C bis +95°C (gemessen in der Schicht) Erzeugung einer Haftklebstoffschicht mit einen Loop Tack, gemessen nach der FTM-9-Methode der FINAT, von wenigstens 0.787 N/cm [2 N/inch];
**dadurch gekennzeichnet, dass** in einem anschließenden Schritt
iv) eine Wärmebehandlung (b) der in Schritt (iii) erzeugten Haftklebstoffschicht erfolgt, wobei diese kontinuierlich, stufenweise oder direkt auf eine die Temperatur (a) übersteigende Temperatur gebracht wird, welche die Temperatur (a) um mindestens +40°C übersteigt und die Scherfestigkeit der resultierenden Klebverbindung der so erzeugten Haftklebstoffschicht durch diese Wärmebehandlung (b) um mindestens 10% erhöht wird verglichen mit der Scherfestigkeit der Haftklebstoffschicht ohne Wärmebehandlung (b).

10. Verwendung gemäß Anspruch 9, **dadurch gekennzeichnet, dass** die wässerige Dispersion oder Lösung (i) eine minimale Filmbildungstemperatur (MFT) von kleiner oder gleich +5°C aufweist.

11. Verwendung gemäß Ansprüchen 9 bis 10, **dadurch gekennzeichnet, dass** das isocyanatreaktive Polymer ein Speichermodul G' kleiner oder gleich 10⁷ pa, gemessen bei 10 Hz und +10°C, hat.

12. Verwendung gemäß Ansprüchen 9 bis 11, **dadurch gekennzeichnet, dass** das feste oberflächendesaktivierte Polyisocyanat einen mittleren Teilchendurchmesser (Gewichtsmittel) kleiner oder gleich 10 µm hat.

13. Verwendung gemäß Ansprüchen 9 bis 12, **dadurch gekennzeichnet, dass** das isocyanatreaktive Polymer ausgewählt ist aus der Gruppe bestehend aus Acrylester-, Methacrylester-, Acrylnitril-, Vinylacetat-, Styrol-, Ethylen-, Butadien- oder α-Chlorbutadien-copolymeren, Polyurethanen auf Polyester- oder Polyetherbasis und Polyharnstoffen auf Polyester oder Polyetherbasis.

14. Verwendung gemäß Ansprüchen 9 bis 13, **dadurch gekennzeichnet, dass** das Verhältnis der Isocyanatgruppen des Polyisocyanats und der isocyanatreaktiven Gruppen der Polymere in der wässerigen Dispersion oder Lösung im Bereich von 0.1 bis 1.5 liegt.

## Claims

1. Process for the production of a pressure-sensitive adhesive layer, comprising
i) preparation of an aqueous dispersion or solution containing at least one isocyanate-reactive polymer having a glass transition temperature T_{g} less than or equal to -5°C and a solid surface-deactivated polyisocyanate;
ii) application of the aqueous dispersion or solution to a substrate;
iii) by removal of the water or solvent by drying at a temperature (a) from +20°C to +95°C (measured in the layer), production of a pressure-sensitive adhesive layer having a loop tack, measured by the FTM-9 method of the FINAT, of at least 0.787 N/cm [2 N/inch] ;
**characterised in that** in a subsequent step
iv) heat treatment (b) of the pressure-sensitive adhesive layer produced in step (iii) is carried out, wherein the layer is brought continuously, stepwise or directly to a temperature exceeding the temperature (a), which temperature exceeds the temperature (a) by at least +40°C, and the shear strength of the resulting adhesive bond of the pressure-sensitive adhesive layer so produced is increased by the heat treatment (b) by at least 10 %, compared with the shear strength of the pressure-sensitive adhesive layer without heat treatment (b).

2. Process according to claim 1, **characterised in that** the aqueous dispersion or solution (i) has a minimum film-forming temperature (MFT) less than or equal to +5°C.

3. Process according to either claim 1 or claim 2, **characterised in that** the isocyanate-reactive polymer has a storage modulus G' less than or equal to 10⁷ Pa, measured at 10 Hz and +10°C.

4. Process according to any one of claims 1 to 3, **characterised in that** the solid surface-deactivated polyisocyanate has a mean particle diameter (weight average) less than or equal to 10 µm.

5. Process according to any one of claims 1 to 4, **characterised in that** the isocyanate-reactive polymer is selected from the group consisting of acrylic ester, methacrylic ester, acrylonitrile, vinyl acetate, styrene, ethylene, butadiene or α-chlorobutadiene copolymers, polyester- or polyether-based polyurethanes and polyester- or polyether-based polyureas.

6. Process according to any one of claims 1 to 5, **characterised in that** the ratio of the isocyanate groups of the polyisocyanate and the isocyanate-reactive groups of the polymers in the aqueous dispersion or solution is in the range from 0.1 to 1.5.

7. Pressure-sensitive adhesive bond produced by bringing a substrate coated with a pressure-sensitive adhesive layer obtained by the process according to claims 1 to 7 into contact with a substrate that is not coated with such a layer on the contact surface.

8. Pressure-sensitive adhesive bond according to claim 7, **characterised in that** its crosslinking density Mc is at least 3000 g/mol.

9. Use of an aqueous dispersion or solution containing at least one isocyanate-reactive polymer and a solid surface-deactivated polyisocyanate in the production of a pressure-sensitive adhesive layer having a loop tack of at least 0.787 N/cm [2 N/inch], wherein the pressure-sensitive adhesive layer has been obtained by
i) preparation of an aqueous dispersion or solution containing at least one isocyanate-reactive polymer having a glass transition temperature T_{g} less than or equal to -5°C and a solid surface-deactivated polyisocyanate;
ii) application of the aqueous dispersion or solution to a substrate;
iii) by removal of the water or solvent by drying at a temperature (a) from +20°C to +95°C (measured in the layer), production of a pressure-sensitive adhesive layer having a loop tack, measured by the FTM-9 method of the FINAT, of at least 0.787 N/cm [2 N/inch];
**characterised in that** in a subsequent step
iv) heat treatment (b) of the pressure-sensitive adhesive layer produced in step (iii) is carried out, wherein the layer is brought continuously, stepwise or directly to a temperature exceeding the temperature (a), which temperature exceeds the temperature (a) by at least +40°C, and the shear strength of the resulting adhesive bond of the pressure-sensitive adhesive layer so produced is increased by the heat treatment (b) by at least 10 %, compared with the shear strength of the pressure-sensitive adhesive layer without heat treatment (b).

10. Use according to claim 9, **characterised in that** the aqueous dispersion or solution (i) has a minimum film-forming temperature (MFT) less than or equal to +5°C.

11. Use according to claims 9 to 10, **characterised in that** the isocyanate-reactive polymer has a storage modulus G' less than or equal to 10⁷ Pa, measured at 10 Hz and +10°C.

12. Use according to claims 9 to 11, **characterised in that** the solid surface-deactivated polyisocyanate has a mean particle diameter (weight average) less than or equal to 10 µm.

13. Use according to claims 9 to 12, **characterised in that** the isocyanate-reactive polymer is selected from the group consisting of acrylic ester, methacrylic ester, acrylonitrile, vinyl acetate, styrene, ethylene, butadiene or α-chlorobutadiene copolymers, polyester- or polyether-based polyurethanes and polyester- or polyether-based polyureas.

14. Use according to claims 9 to 13, **characterised in that** the ratio of the isocyanate groups of the polyisocyanate and the isocyanate-reactive groups of the polymers in the aqueous dispersion or solution is in the range from 0.1 to 1.5.

## Revendications

1. Procédé de préparation d'une couche auto-adhésive, comprenant :
i) la préparation d'une dispersion ou solution aqueuse contenant au moins un polymère réagissant avec les isocyanates, avec une température de transition vitreuse Tv inférieure ou égale à -5°C et un polyisocyanate solide désactivé en surface ;
ii) l'application de la dispersion ou solution aqueuse sur un substrat ;
iii) par l'élimination de l'eau ou du solvant par séchage à une température (a) allant de +20°C à +95°C (mesurée dans la couche), la production d'une couche auto-adhésive avec un tack à la boucle, mesuré selon le procédé FTM-9 de FINAT d'au moins 0,787 N/cm [2 N/pouce] ;
**caractérisé en ce que** dans une étape suivante
iv) un traitement thermique (b) de la couche auto-adhésive produite à l'étape (iii) est réalisé, où celle-ci est portée de manière continue, graduelle ou directement à une température dépassant la température (a), qui dépasse la température (a) d'au moins +40°C et la résistance au cisaillement du composant collant résultant de la couche auto-adhésive ainsi produite est augmentée par ce traitement thermique (b) d'au moins 10%, par comparaison à la résistance au cisaillement de la couche auto-adhésive sans traitement thermique (b).

2. Procédé selon la revendication 1, **caractérisé en ce que** la dispersion ou solution aqueuse (i) présente une température minimale de formation de film (MFT) inférieure ou égale à +5°C.

3. Procédé selon l'une des revendications 1 à 2, **caractérisé en ce que** le polymère réagissant avec les isocyanates a un module de conservation G' inférieur ou égal à 10⁷ Pa, mesuré à 10 Hz et +10°C.

4. Procédé selon l'une des revendications 1 à 3, **caractérisé en ce que** le polyisocyanate solide désactivé en surface a un diamètre moyen des particules (moyenne en poids) inférieure ou égale à 10 µm.

5. Procédé selon l'une des revendications 1 à 4, **caractérisé en ce que** le polymère réagissant avec les isocyanates est choisi parmi le groupe constitué par les copolymères d'acrylate, de méthacrylate, d'acrylonitrile, d'acétate de vinyle, de styrène, d'éthylène, de butadiène ou d'α-chlorobutadiène, des polyuréthannes à base de polyester ou de polyéther et des polyurées à base de polyester ou de polyéther.

6. Procédé selon l'une des revendications 1 à 5, **caractérisé en ce que** le rapport des groupes isocyanate du polyisocyanate aux groupes réagissant avec les isocyanates du polymère dans la dispersion ou solution aqueuse se situe dans l'intervalle allant de 0,1 à 1,5.

7. Composé auto-adhésif préparé par mise en contact d'un substrat revêtu d'une couche auto-adhésive obtenu par le procédé selon les revendications 1 à 6, avec un substrat qui n'est pas revêtu d'une telle couche sur la surface de contact.

8. Composé auto-adhésif selon la revendication 7, **caractérisé en ce que** sa densité de réticulation Mc s'élève à au moins 3000 g/mole.

9. Utilisation d'une dispersion ou solution aqueuse contenant au moins un polymère réagissant avec les isocyanates et un polyisocyanate solide, désactivé en surface, pour la préparation d'une couche auto-adhésive avec un tack à la boucle d'au moins 0,787 N/cm [2 N/pouce], où la couche auto-adhésive est obtenue par
i) la préparation d'une dispersion pu solution aqueuse contenant au moins un polymère réagissant avec les isocyanates, avec une température de transition vitreuse Tv inférieure ou égale à -5°C et un polyisocyanate solide désactivé en surface ;
ii) l'application de la dispersion ou solution aqueuse sur un substrat ;
iii) par l'élimination de l'eau ou du solvant par séchage à une température (a) allant de +20°C à +95°C (mesurée dans la couche), la production d'une couche auto-adhésive avec un tack à la boucle, mesuré selon le procédé FTM-9 de FINAT d'au moins 0,787 N/cm [2 N/pouce] ;
**caractérisé en ce que** dans une étape suivante
iv) un traitement thermique (b) de la couche auto-adhésive produite à l'étape (iii) est réalisé, où celle-ci est portée de manière continue, graduelle ou directement à une température dépassant la température (a), qui dépasse la température (a) d'au moins +40°C et la résistance au cisaillement du composant collant résultant de la couche auto-adhésive ainsi produite est augmentée par ce traitement thermique (b) d'au moins 10%, par comparaison à la résistance au cisaillement de la couche auto-adhésive sans traitement thermique (b).

10. Utilisation selon la revendication 9, **caractérisée en ce que** la dispersion ou solution aqueuse (i) présente une température minimale de formation de film (MFT) inférieure ou égale à +5°C.

11. Utilisation selon les revendications 9 à 10, **caractérisée en ce que** le polymère réagissant avec les isocyanates a un module de conservation G' inférieur ou égal à 10⁷ Pa, mesuré à 10 Hz et +10°C.

12. Utilisation selon les revendications 9 à 11, **caractérisée en ce que** le polyisocyanate solide désactivé en surface a un diamètre moyen des particules (moyenne en poids) inférieure ou égale à 10 µm.

13. Utilisation selon les revendications 9 à 12, **caractérisée en ce que** le polymère réagissant avec les isocyanates est choisi parmi le groupe constitué par les copolymères d'acrylate, de méthacrylate, d'acrylonitrile, d'acétate de vinyle, de styrène, d'éthylène, de butadiène ou d'α-chlorobutadiène, des polyuréthannes à base de polyester ou de polyéther et des polyurées à base de polyester ou de polyéther.

14. Utilisation selon les revendications 9- à 13, **caractérisée en ce que** le rapport des groupes isocyanate du polyisocyanate aux groupes réagissant avec les isocyanates du polymère dans la dispersion ou solution aqueuse se situe dans l'intervalle allant de 0,1 à 1, 5.
